# EUROPÄISCHE PATENTSCHRIFT

(11) **EP 1 484 278 B1**
(45) Veröffentlichungstag und Bekanntmachung des Hinweises auf die Patenterteilung: **24.01.2007**
(21) Anmeldenummer: 04090162.1
(22) Anmeldetag: 23.04.2004
(51) Int. Cl.: B66F 9/06, B65G 1/04

(54) **Einrichtung, Regalbediengerät und Regallager zum Ein- und Auslagern von Paletten**
Device, stacker crane and shelf storage for moving pallets in and out of storage
Dipositif, grue gerbeuse et magasin à rayonnage pour l'emmagasinage et le transport de palettes

(30) Priorität: 26.05.2003 DE 10323849
(43) Veröffentlichungstag der Anmeldung: 08.12.2004
(73) Patentinhaber: SIEMENS AKTIENGESELLSCHAFT, 80333 München (DE)
(72) Erfinder: Liehmann, Horst, 58239 Schwerte (DE)

(56) Entgegenhaltungen:
- DE-A1- 4 031 883
- US-A- 2 818 989
- US-A- 3 283 933
- US-A- 4 003 296

## Beschreibung

Die Erfindung betrifft eine Einrichtung, ein Regalbediengerät und ein Regallager zum Ein- und Auslagern von Paletten gemäß den Oberbegriffen der Ansprüche 1, 10 und 11.

Hochregallager zum Ein- und Auslagern von Paletten, auf denen sich die zu lagernden Güter befinden, sind bekannt. Solche Hochregallager weisen meist mehrere Regale auf, zwischen denen sich ein Regalgang befindet, in welchem jeweils ein Regalbediengerät längsverfahrbar ist. Jedes Regalbediengerät ist mit einer vertikal verfahrbaren Einrichtung ausgestattet, mit deren Hilfe die Paletten ein- und ausgelagert werden. Hierzu kann die Einrichtung zwei parallele Gabeln aufweisen, die quer zum Regalgang in Ein- und- Auslagerrichtung aus- bzw. einfahrbar sind. Die Paletten können auf ihrer Unterseite nutförmige Vertiefungen aufweisen, deren Abstand und Breite dem der beiden Gabeln entspricht. Andererseits können die Paletten aber auch als Blockpaletten ausgebildet sein, bei denen anstelle der Vertiefungen Bodenbretter vorhanden sind, welche auf den beiden Gabelblättern aufliegen.

So ist aus der DE 40 31 883 A1 bereits ein Aufnahme- und Abgabesystem für Paletten mit einem Regalbediengerät bekannt, das einen Fahrantrieb und einen heb- und senkbaren Hubtisch mit einer Teleskopgabel zum Anheben, Bewegen und Absetzen der Paletten aufweist. Die Aufnahme und Abgabe erfolgt an Übergabeplätzen, wobei es sich bei dem Regalbediengerät auch um ein Regalförderzeug, ein Verteilergerät oder ein fahrerloses Transportsystem handeln kann. Zur Aufnahme untergreifen zwei Teleskopgabeln jeweils die Palette.

Weiter zeigt die DE 24 21 396 eine Vorrichtung zum Umsetzen von Lasten in eine mit einem Teleskoptisch-Lastträger ausgerüsteten Hubwagen eines Regalförderzeuges, die für das Ein- und Auslagern von Paletten geeignet ist, welche nach unten hin offen ausgebildete Durchgriffsöffnungen aufweisen. Der Teleskoptisch-Lastträger verfügt über zwei teleskopartig ausfahrbare Gabeln, die parallel zueinander verlaufen. Zum Ein- und Auslagern greifen diese Teleskopgabeln in die Durchgriffsöffnungen ein, so dass sich die Paletten auf den Teleskopgabeln abstützen. Die Paletten weisen bezogen auf den Abstand der beiden Gabeln beidseitig einen Überstand auf, der allerdings durch das Einfahren der Teleskopgabeln in die Durchgriffsöffnungen deutlich verkleinert ist, da sich die Paletten in diesem Bereich auf den Teleskopgabeln abstützen.

Der US-PS 28 18 989 ist ein Gabelstapler für Paletten entnehmbar, der zwei beabstandete parallele Gabeln aufweist, welche in Durchgriffsöffnungen der Paletten einfahrbar sind. Die aufgenommenen Paletten sind dabei aus Längs- und Querträgern in Form von Holzbrettern gebildet. Beim Aufnehmen und Transportieren der Paletten stützen sich diese mit den Querträgern auf den beiden Gabeln ab. Um ein Abkippen der Palette zu verhindern, sind an den Gabelenden Stützelemente vorgesehen, welche frei drehbar gelagert sind. Die Drehachse der Stützelemente verläuft dabei quer zur Längsrichtung der Gabeln; die frei drehbaren Stützelemente bewegen sich aufgrund der Schwerkraft jeweils selbsttätig in ihre obere Stellung, ragen also oben aus den Gabelenden heraus. Sie liegen beim Transport der Paletten jeweils an der Unterseite eines Längsträgers an und sorgen so für eine zusätzliche Abstützung der Palette. Die freie Drehbarkeit der Stützelemente ermöglicht es, die beiden Gabeln in die Durchgriffsöffnungen der Palette einzufahren, ohne dass die Stützelemente sich mit den vorsprungartig nach unten erstreckenden Querträgern verhaken können. Treffen die Stützelemente beim Ein- und Ausfahren der Stützelemente auf die Querträger, so werden sie mehr oder weniger in ihre horizontale Lage gedreht und das Ein- und Ausfahren der Gabeln ist ohne Störungen möglich.

Nachteilig ist dabei, dass mit den bekannten Einrichtungen zum Ein- und Auslagern der Paletten nicht beide Palettentypen (Paletten mit nach unten hin offen ausgebildeten Durchgriffsöffnungen als auch Paletten ohne solche Durchgriffsöffnungen, z. B. Blockpaletten) ein- und ausgelagert werden können.

Die Aufgabe der Erfindung besteht darin, eine Einrichtung zum Ein- und Auslagern von Paletten vorzuschlagen, bei der mehrere unterschiedliche Palettentypen ein- und auslagerbar sind.

Die Lösung dieser Aufgabe ist für die Einrichtung, das Regalbediengerät und das Regallager durch die in den Ansprüchen 1, 10 und 11 angegebenen Merkmale gegeben. Die kennzeichnenden Merkmale der Unteransprüche gestalten die Einrichtung in vorteilhafter Weise weiter aus.

Die Lösung sieht bezogen auf das Regallager, das Regalbediengerät und die Einrichtung vor, dass die Einrichtung eine sich beidseitig auf den Gabeln abstützende Platte und an den Gabeln oder der Platte gelagerte Stützelemente aufweist, welche in die nach unten offenen Durchgriffsöffnungen der jeweils aufliegenden Palette hochklappbar sind, so dass bei einem Verkippen der Palette eine zusätzliche seitliche Abstützung der Palette erfolgt. Die Verwendung der Platte führt zunächst dazu, dass beide Palettentypen ein- und ausgelagert werden können. Allerdings kann es bei Paletten mit nutförmigen Vertiefungen bei einer entsprechenden Gewichtsverteilung des auf der Palette aufliegenden Gutes zu einem Abkippen der Palette kommen. Dies wird durch die hochklappbaren Stützelemente verhindert.

Um Verspannungen der Gabeln gegeneinander zu vermeiden, wird die Platte nur an einer der beiden Gabeln befestigt.

Ein sicherer Kippschutz wird erzielt, wenn das Hochklappen soweit erfolgt, dass bis zur Anlage der Stützelemente an den Böden der nutförmigen Vertiefungen ein Luftspalt verbleibt.

Bei einem einfachen Hochklappmechanismus erfolgt das Hochklappen jedes Stützelements mittels eines an der zugehörigen Gabel drehgelagerten Hebels, der in seiner Bereitschaftsstellung durch eine weitere Plattenöffnung über die Plattenoberseite hinausragt und beim Aufnehmen der Palette von deren Unterseite nach unten zurück in die Plattenöffnung gedrückt wird. Das Hochklappen wird erst bei Aufnahme der Palette durch deren Gewichtskraft bewirkt.

Zweckmäßigerweise ist der Hochklappmechanismus mit einem Hebel versehen, der an seinem über die Plattenoberseite hinausragenden Ende eine Rolle trägt, um die auftretenden Reibungskräfte zu verringern.

Um jeden beliebigen Palettentyp aufnehmen zu können, wird der Hebel bei Abgabe der Palette mittels einer Rückholfeder in seine Bereitschaftsstellung zurückgeholt und in dieser Stellung gehalten.

Damit die Einrichtung in einem Regallager einsetzbar ist, ist diese an einem Regalbediengerät verfahrbar ausgebildet, wobei das Regallager zumindest ein Regal umfasst, an dessen Längsseit das Regalbediengerät längsverfahrbar ist, während die beiden Gabeln in Ein- und Auslagerrichtung quer zum Regal ausfahrbar sind.

Die Erfindung wird nachfolgend anhand einer Zeichnung näher beschrieben. Es zeigen:
- Fig. 1: eine Einrichtung mit einer Palette, die nach unten offene Durchgriffsöffnungen aufweist, mit hochgeklappten Stützelementen in einer schematischen Vorderansicht,
- Fig. 2: die Einrichtung gemäß Fig. 1 in einer schematischen Seitenansicht und
- Fig. 3: einen Ausschnitt der Einrichtung gemäß Fig. 1 ohne Palette von schräg oben gesehen.

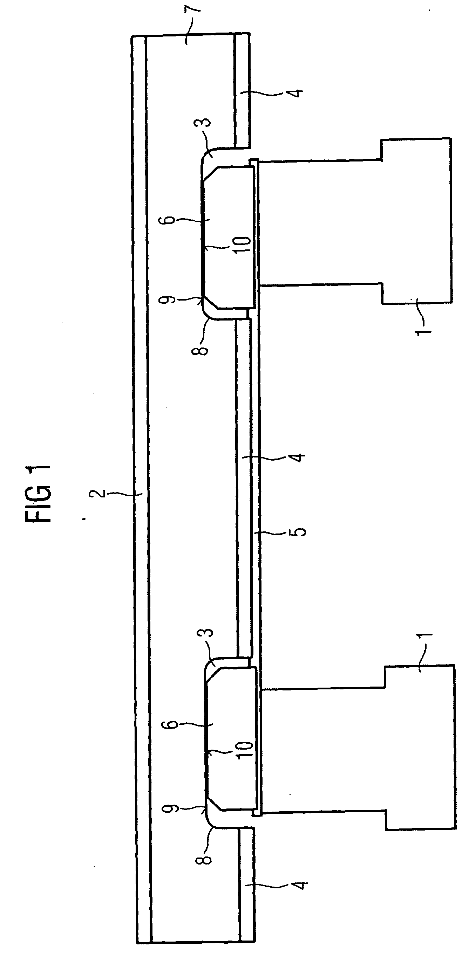

Fig. 1 zeigt zwei parallel beabstandete Gabeln 1 einer Einrichtung zum Ein- und Auslagern von Paletten nach Aufnahme einer Palette 2.

Die Einrichtung gehört zu einem Regalbediengerät, an dem sie auf einem Hubwagen angeordnet vertikal verfahrbar ist (nicht gezeigt). Das Regalbediengerät ist in einem Gang eines Hochregallagers längs zweier einander parallel gegenüberliegender Regale längs verfahrbar.

In dem Hochregallager werden auf Paletten 2 abgelegte Güter ein- und ausgelagert. Bei den Paletten handelt es sich zumindest teilweise um Paletten 2, deren Durchgriffsöffnungen bezüglich ihrer Breite sowie ihres Abstandes dem der beiden Gabeln 1 entspricht. Die Paletten 2 weisen bezogen auf den Abstand der beiden Gabeln 1 einen Überstand auf. Bei der in Fig. 1 dargestellten Palette 2 sind die Durchgriffsöffnungen 3 nach unten offen ausgebildet, d. h. alle unteren Holzleisten 4 der Palette 2 sind im Bereich der Durchgriffsöffnungen 3 unterbrochen. Die unteren Holzleisten 4 zwischen den beiden Durchgriffsöffnungen 3 sind an einer Metallplatte 5 abgestützt, die wiederum auf den beiden Gabeln 1 aufliegt. Die Platte 5 ist dabei nur an einer der Gabeln 1 befestigt. Bei den nach unten offenen Durchgriffsöffnungen 3 ist der Überstand der Palette 2 relativ groß (deutlich größer als bei geschlossenen Durchgriffsöffnungen 3 von Blockpaletten, wie Fig. 1 zeigt). Um ein Verkippen der Palette 2 mit nach unten offenen Durchgriffsöffnungen - insbesondere bei ungleichmäßiger Gewichtsverteilung des zu lagernden Gutes - zu verhindern, sind Stützelemente 6 vorgesehen, an denen sich die Palette 2 bei einem Verkippen abstützt. Hierzu befinden sich die Stützelemente 6 jeweils im Bereich eines Querträgers 7, z. B. eines Holzbretts oder Holzbalkens. Der Querträger 7 verläuft - wie Fig. 1 zeigt - quer zur Längserstreckungsrichtung der Gabeln 1 bzw. quer zur Ein- und Auslagerungsrichtung. An den Querträgern 7 sind die Durchgriffsöffnungen 3 durch zueinander fluchtende nutförmige Ausnehmungen 8 gebildet, die jeweils einen Boden 9 aufweisen. Zwischen den Böden 9 der Ausnehmungen 8 und den Oberkanten 10 der Stützelemente 6 befindet sich in dieser Stellung der Stützelemente 6 ein kleiner Zwischenraum in Form eines Luftspalts, d. h. die Böden 9 und die gegenüberliegenden Oberkanten 10 sind bei unverkippter Palette voneinander beabstandet. Erst beim Verkippen der Palette 2 kommen die Oberkanten 10 auf einer Seite der Palette an dem gegenüberliegenden Boden 9 zur Anlage, so dass die Palette 2 mittels der Stützelemente 6 zusätzlich abgestützt ist.

Die beiden Gabeln 1 sind in Ein- und Auslagerrichtung einund ausfahrbar.

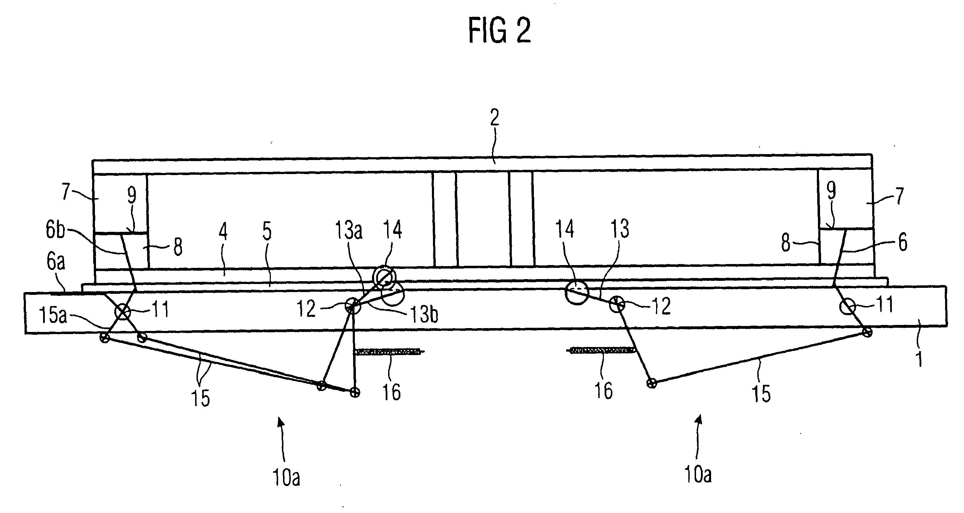

Fig. 2 zeigt eine Seitenansicht der Einrichtung mit aufgenommener Palette 2 in einer schematischen Darstellung. Dabei zeigt Fig. 2 ein Hebelsystem 10a, mit dessen Hilfe die Stützelemente 6 aus einer Bereitschaftsstellung 6a in ihre Stützstellung 6b verschwenkbar sind. Hierzu sind die Stützelemente 6 an der jeweiligen Gabel 1 drehgelagert (Drehpunkt 11). Selbstverständlich kann sich die Drehlagerung auch an der Platte 5 befinden.

Die Stützelemente 6 sind also in die nach unten offenen Durchgriffsöffnungen bildenden Ausnehmungen 8 hochklappbar.

Das Hochklappen eines Stützelementes 6 erfolgt mit Hilfe eines an der zugehörigen Gabel 1 drehgelagerten (Drehpunkt 12) Hebels 13, der aus einer Bereitschaftsstellung 13a in eine Hochklappstellung 13b verschwenkbar ist. Der Hebel 13 trägt an seinem der Palettenunterseite zugewandten Ende eine Rolle 14 und ist über eine Verbindungsstange 15 mit dem Hebel 15a des Stützelements 6 gelenkig verbunden.

Das Verschwenken des Hebels 13 erfolgt dadurch, dass die Rolle 14 durch das Gewicht der Palette 2 nach unten gedrückt wird. Bei Abgabe der Palette 2 wird der Hebel 13 mittels einer Rückholfeder 16 wieder zurück in seine Bereitschaftsstellung 13a geholt und in dieser Stellung gehalten.

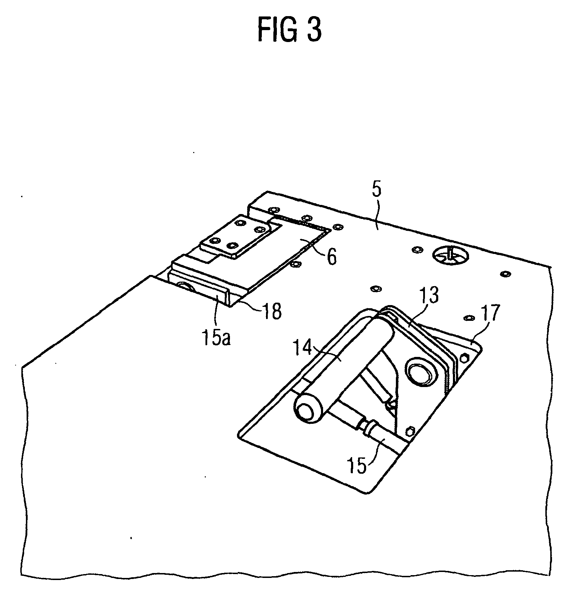

Fig. 3 zeigt einen Ausschnitt der Platte 5 der Einrichtung mit Blickrichtung von schräg oben, wobei sich der Hebel 13 mit der Rolle 14 in seine Bereitschaftsstellung 13a befindet. Entsprechend nimmt auch das Stützelement 6 seine Bereitschaftsstellung 6a ein. Wie Fig. 3 zeigt, ist in der Platte 5 eine Plattenöffnung 17 vorgesehen, durch welche die Rolle 14 über die Plattenoberseite hinausragt, so dass sie beim Aufnehmen einer Palette 2 von deren Unterseite nach unten in die Plattenöffnung 17 gedrückt wird. Dadurch wird das Stützelement 6 hochgeklappt, durch die in der Platte 5 für das Stützelement 6 vorgesehene Öffnung 18. Fig. 3 lässt erkennen, dass das Hebelsystem 10a sich im wesentlichen in einer Vertikalebene seitlich von der zugehörigen abstützenden Gabel 1 befindet, wobei das Stützelement 6 auf Seiten der Gabel 1 angeordnet ist. Die Rolle 14 erstreckt sich also quer zur Gabel 1 von dieser weg. Auf diese Weise wird erreicht, dass auch Paletten von der Einrichtung gefördert werden können, welche keine nach unten offene Durchgriffsöffnung 3 aufweisen. Voraussetzung zur Aufnahme solcher Paletten 2 ist lediglich, dass diese im Bereich der Rolle 14 jeweils eine Öffnung entsprechend der Größe aufweisen, so dass sich die Rolle 14 mit einem Teil des Hebels 13 in diese Öffnung hineinerstrecken kann, ohne dass die Rolle 14 den Hebel 13 nach unten drückt. Die Stützelemente 6 bleiben bei dieser Palettenart in ihrer Bereitschaftsstellung 6a, in der sie nicht über die Oberseite der Platte 5 hinausragen.

Letztere Palettenart wird häufig auch als Blockpalette bezeichnet, während es sich bei den Paletten 2 mit den nach unten offenen Durchgriffsöffnungen 3 um Stringer-Paletten handelt.

### Bezugszeichenliste

- 1: Gabel
- 2: Palette
- 3: Durchgriffsöffnung
- 4: Holzleiste
- 5: Metallplatte
- 6: Stützelement
- 6a: Bereitschaftsstellung
- 6b: Stützstellung
- 7: Querträger
- 8: Ausnehmung
- 9: Boden
- 10: Oberkante
- 10a: Hebelsystem
- 11: Drehpunkt
- 12: Drehpunkt
- 13: Hebel
- 13a: Hebel in Bereitschaftsstellung
- 13b: Hebel in Hochklappstellung
- 14: Rolle
- 15: Verbindungsstange
- 15a: Hebel
- 16: Rückholfeder
- 17: Plattenöffnung
- 18: Plattenöffnung

## Patentansprüche

1. Einrichtung mit zwei in Ein- und Auslagerrichtung bewegbaren parallelen Gabeln (1) zum Ein- und Auslagern von Paletten (2),
welche zwei nach unten hin offen ausgebildete Durchgriffsöffnungen (3) für die beiden Gabeln (1) aufweisen können, deren Breite und Abstand dem der beiden Gabeln (1) entspricht, wobei die Paletten (2) bezogen auf den Abstand der beiden Gabeln (1) einen Überstand aufweisen
**dadurch gekennzeichnet,**
**dass** die Einrichtung eine sich beidseitig auf den Gabeln (1) abstützende Platte (5) und an den Gabeln (1) oder der Platte (5) gelagerte Stützelemente (6) aufweist, welche in die nach unten offenen Durchgriffsöffnungen (3) der jeweils aufliegenden Palette (2) hochklappbar sind, so dass bei einem Verkippen der Palette (2) eine zusätzliche seitliche Abstützung der Palette (2) erfolgt.

2. Einrichtung nach Anspruch 1,
**dadurch gekennzeichnet,**
**dass** in der Platte (2) Öffnungen (18) vorgesehen sind, durch welche die Stützelemente (6) hochklappbar sind, und dass das Hochklappen beim Aufnehmen der Palette (2) mit den nach unten offenen Durchgriffsöffnungen (3) durch deren Gewicht bewirkt wird.

3. Einrichtung nach Anspruch 1 oder 2,
**dadurch gekennzeichnet,**
**dass** die Platte (5) nur an einer der Gabeln (1) befestigt ist.

4. Einrichtung nach einem der Ansprüche 1 - 3,
**dadurch gekennzeichnet,**
**dass** die Paletten (2) mit den nach unten offenen Durchgriffsöffnungen (3) quer zur Ein- und Auslagerrichtung verlaufende Querträger (7) aufweisen, die Durchgriffsöffnungen (3) an den Querträgern (7) durch nutförmige Ausnehmungen (8) gebildet sind und das Hochklappen soweit erfolgt, dass bis zur Anlage der Stützelemente (6) an den Böden (9) der Ausnehmungen (8) ein Luftspalt verbleibt, so dass die Stützelemente (6) erst beim Verkippen der Palette (2) an den Böden (9) der entsprechenden gegenüberliegenden Ausnehmungen (8) zur Anlage kommen.

5. Einrichtung nach einem der Ansprüche 1 - 4,
**dadurch gekennzeichnet,**
**dass** das Hochklappen jedes Stützelements (6) mittels eines an der zugehörigen Gabel (1) drehgelagerten Hebels (13) erfolgt, der in seiner Bereitschaftsstellung (13a) durch eine weitere Plattenöffnung (17) über die Plattenoberseite hinausragt und beim Aufnehmen der Palette (2) von deren Unterseite nach unten in die Plattenöffnung (17) gedrückt wird.

6. Einrichtung nach Anspruch 5,
**dadurch gekennzeichnet,**
**dass** der Hebel (13) an seinem über die Plattenoberseite hinausragenden Ende seitlich neben der zugehörigen Gabel (1) eine Rolle (14) trägt.

7. Einrichtung nach Anspruch 5 oder 6,
**dadurch gekennzeichnet,**
**dass** der Hebel (13) über eine Verbindungsstange (15) mit dem Stützelement (6) verbunden ist.

8. Einrichtung nach einem der Ansprüche 5 - 7,
**dadurch gekennzeichnet,**
**dass** der Hebel (13) bei Abgabe der Palette (2) mittels einer Rückholfeder (16) in seine Bereitschaftsstellung (13a) zurückgeholt und in dieser Stellung gehalten wird.

9. Einrichtung nach einem der Ansprüche 1 - 8,
**dadurch gekennzeichnet,**
**dass** die Einrichtung an einem Regalbediengerät für ein Regallager vertikal verfahrbar ist, wobei das Regallager zumindest ein Regal umfasst, an dessen Längsseite das Regalbediengerät längsverfahrbar ist, wobei die beiden Gabeln (1) in Ein- und Auslagerrichtung quer zum Regal ausfahrbar sind.

10. Regalbediengerät für ein Regallager, insbesondere ein Hochregallager,
das zumindest ein Regal umfasst, an dessen Längsseite das Regalbediengerät längsverfahrbar ist,
mit einer am Regalbediengerät vertikal verfahrbaren Einrichtung mit zwei in Ein- und Auslagerrichtung bewegbaren parallelen Gabeln (1) zum Ein- und Auslagern von Paletten (2),
welche zwei nach unten hin offen ausgebildete Durchgriffsöffnungen (3) für die beiden Gabeln (1) aufweisen können, deren Breite und Abstand dem der beiden Gabeln (1) entspricht, wobei die Paletten (2) bezogen auf den Abstand der beiden Gabeln (1) einen Überstand aufweisen,
**dadurch gekennzeichnet,**
**dass** die Einrichtung eine sich beidseitig auf den Gabeln (1) abstützende Platte (5) und an den Gabeln (1) oder der Platte (5) gelagerte Stützelemente (6) aufweist, welche in die nach unten offenen Durchgriffsöffnungen (3) der jeweils aufliegenden Palette (2) hochklappbar sind, so dass bei einem Verkippen der Palette (2) eine zusätzliche seitliche Abstützung der Palette (2) erfolgt.

11. Regallager, insbesondere Hochregallager,
mit zumindest einem Regal, an dessen Längsseite ein Regalbediengerät längsverfahrbar ist,
mit einer am Regalbediengerät vertikal verfahrbaren Einrichtung mit zwei in Ein- und Auslagerrichtung bewegbaren parallelen Gabeln (1) zum Ein- und Auslagern von Paletten (2),
welche zwei nach unten hin offen ausgebildete Durchgriffsöffnungen (3) für die beiden Gabeln (1) aufweisen können, deren Breite und Abstand dem der beiden Gabeln (1) entspricht, wobei die Paletten (2) bezogen auf den Abstand der beiden Gabeln (1) einen Überstand aufweisen,
**dadurch gekennzeichnet,**
**dass** die Einrichtung eine sich beidseitig auf den Gabeln (1) abstützende Platte (5) und an den Gabeln (1) oder der Platte (5) gelagerte Stützelemente (6) aufweist, welche in die nach unten offenen Durchgriffsöffnungen (3) der jeweils aufliegenden Palette (2) hochklappbar sind, so dass bei einem Verkippen der Palette (2) eine zusätzliche seitliche Abstützung der Palette (2) erfolgt.

## Claims

1. A device with two parallel forks (1) for moving pallets into and out of storage, which are movable in the inward and outward direction and can have two downwardly open engagement openings (3) for the two forks (1), the width and spacing of which correspond to that of the two forks (1), whereby the pallets (2) project beyond the spacing of the two forks (1), **characterised in that** the device includes a plate (5), which bears on both sides on the forks (1) and support elements (6) mounted on the forks (1) or the plate (5), which may be swung up into the downwardly open engagement openings (3) in the pallet (2) resting on them so that if the pallet should tilt there is an additional lateral support of the pallet (2).

2. A device as claimed in Claim 1, **characterised in that** provided in the plate (2) there are openings (18) through which the support elements (60 may be swung up and that when a pallet (2) with the downwardly open engagement openings (3) is received the swinging up process is effected by their weight.

3. A device as claimed in Claim 1 or 2, **characterised in that** the plate (5) is connected only to one of the forks (1).

4. A device as claimed in Claims 1 - 3, **characterised in that** the pallets (2) with the downwardly open engagement openings (3) have crosspieces (7) extending transverse to the inward and outward direction, the engagement openings (3) are formed in the crosspieces (7) by groove-shaped recesses (8) and that the swinging up process occurs until an air gap remains before engagement of the support element (6) with the bases (9) of the recesses (8) so that only when the pallet (2) tilts do the support elements (6) come into engagement with the bases (9) of the corresponding opposing recesses (8).

5. A device as claimed in Claim 1 - 4, **characterised in that** the swinging up of each support element (6) is effected by means of a lever (13), which is rotationally mounted on the associated fork (1) and, in its initial position (13a), projects beyond the upper surface of the plate through a further plate opening (17) and, when a pallet (2) is received, it is pressed downwardly by its underside into the plate opening (17).

6. A device as claimed in Claim 5, **characterised in that** the lever (13) carries a roller (14) laterally adjacent to the associated fork (1) on its end projecting beyond the upper surface of the plate.

7. A device as claimed in Claim 5 or 6, **characterised in that** the lever (13) is connected to the support element (6) by means of a connecting rod (15).

8. A device as claimed in Claim 5 - 7, **characterised in that** when the pallet (2) is transferred, the lever (13) is returned into its initial position (13a) and held in this position by means of a return spring (16).

9. A device as claimed in Claim 1 of Claims 1-8, **characterised in that** the device is vertically movable on a shelf access device for shelf storage, the shelf storage including at least on shelf on whose longitudinal side the shelf access device is longitudinally movable, the two forks (1) being extendable transverse to the shelf in the inward and outward direction.

10. A shelf access device for shelf storage, particularly high shelf storage, which includes at least one shelf, on whose longitudinal side the shelf access device is longitudinally movable, including a device, which is vertically movable on the shelf access device, with two parallel forks (1) for moving pallets (2) into and out of storage in the inward and outward direction, which can have two downwardly open engagement openings (3) for the two forks (1), the width and spacing of which corresponds to that of the two forks (1), the pallets (2) projecting the beyond the spacing of the two forks (1), **characterised in that** the device includes a plate (5), which bears on both sides on the forks (1) and support elements (6) mounted on the forks (1) or the plate (5), which may be swung up into the downwardly open engagement openings (3) in the pallet (2) resting on them so that if the pallet should tilt there is an additional lateral support of the pallet (2).

11. Shelf storage, particularly high shelf storage, including at least one shelf, longitudinally movable on whose long side there is a shelf access device, including a device, which is vertically movable on the shelf access device, with two parallel forks (1), which are movable in the inward and outward direction, for moving pallets (2) into and out of storage, which can have two downwardly open engagement openings (3) for the two forks (1), the width and spacing of which corresponds to that of the two forks (1), the pallets (2) projecting beyond the spacing of the two forks (1), **characterised in that** the device includes a plate (5), which bears on both sides on the forks (1), and support elements (6) mounted on the forks (1) or the plate (5), which may be swung up into the downwardly open engagement openings (3) in the pallet (2) resting on them so that if the pallet (2) should tilt there is an additional lateral support of the pallet (2).

## Revendications

1. Dispositif comportant deux fourches (1) parallèles mobiles en vue du stockage et du déstockage afin de stocker et déstocker des palettes (2)
lesquelles palettes peuvent comporter deux ouvertures d'engagement (3), ouvertes vers le bas, qui sont destinées aux deux fourches (1) et dont la largeur et l'écartement correspondent à ceux des deux fourches (1), les palettes (2) comportant une projection par rapport à l'écartement des deux fourches (1),
**caractérisé en ce que** le dispositif comporte une plaque (5) portant de chaque côté sur les fourches (1) et des éléments de support (6) qui sont montés sur les fourches (1) ou la plaque (5) et qui peuvent être relevés de façon à pénétrer dans les ouvertures de passage (3), ouvertes vers le bas, de la palette (2) mise en place de manière à supporter davantage la palette (2) latéralement lorsque la palette (2) bascule.

2. Dispositif selon la revendications 1, **caractérisé en ce que** des ouvertures (18) sont ménagées dans la plaque (2) à travers lesquelles les éléments de support (6) peuvent être relevés, et **en ce que** le relèvement est provoqué par le propre poids de la palette (2) lors de sa mise en place avec les ouvertures de passage (3) ouvertes vers le bas.

3. Dispositif selon la revendication 1 ou 2, **caractérisé en ce que** la plaque (5) n'est fixée qu'à l'une des fourches (1).

4. Dispositif selon l'une des revendications 1 à 3, **caractérisé en ce que** les palettes (2) dotées des ouvertures de passage (3) ouvertes vers le bas comportent des traverses (7) s'étendant transversalement à la direction de stockage et de déstockage, **en ce que** les ouvertures de passage (3) sont formées au niveau des traverses (7) par des évidements (8) en forme de gorges et **en ce que** le relèvement est effectué sur une certaine distance jusqu'à la mise en place des éléments de support (6) en ménageant un espace au niveau du fond (9) des évidements (8) de sorte que les éléments de support (6) viennent en appui sur le fond (9) des évidements correspondants (8), situés en face, seulement lorsque la palette (2) bascule.

5. Dispositif selon l'une des revendications 1 à 4, **caractérisé en ce que** le relèvement de chaque élément de support (6) est effectué au moyen d'un levier (13) qui est monté à rotation sur la fourche associée (1) et qui fait saillie au-dessus de la face supérieure de la plaque à travers une autre ouverture (17) ménagée dans la plaque lorsque le levier est dans sa position d'attente (13a) et qui est poussé vers le bas, par la face inférieure de la plaque, jusque dans l'ouverture (17) ménagée dans la plaque lors de la mise en place de la plaque (2).

6. Dispositif selon la revendication 5, **caractérisé en ce que** le levier (13) supporte un rouleau (14) à son extrémité saillant au-dessus de la face supérieure de la plaque, latéralement à côté de la fourche associée (1).

7. Dispositif selon la revendication 5 ou 6, **caractérisé en ce que** le levier (13) est relié à l'élément de support (6) par une barre de liaison (15).

8. Dispositif selon l'une des revendications 5 à 7, **caractérisé en ce que** le levier (13) est ramené dans sa position d'attente (13a) au moyen d'un ressort de rappel (16) lorsque la palette (2) est retirée et est maintenu dans cette position.

9. Dispositif selon l'une des revendications 1 à 8, **caractérisé en ce que** le dispositif peut être déplacé verticalement sur un gerbeur pour magasin à rayonnages, le magasin à rayonnages comportant au moins un rayonnage sur le grand côté duquel le gerbeur est déplaçable longitudinalement et les deux fourches (1) étant extensibles transversalement au rayonnage en vue du stockage et du déstockage.

10. Gerbeur pour magasin à rayonnages, notamment pour magasin vertical à rayonnages, lequel magasin comporte au moins un rayonnage sur le grand côté duquel le gerbeur est déplaçable longitudinalement, le gerbeur comportant un dispositif qui est déplaçable verticalement au niveau du gerbeur et qui comporte deux fourches parallèles mobiles en vue du stockage et du déstockage afin de stocker et déstocker des palettes (2)
lesquelles palettes peuvent comporter deux ouvertures d'engagement (3), ouvertes vers le bas, qui sont destinées aux deux fourches (1) et dont la largeur et l'écartement correspondent à ceux des deux fourches (1), les palettes (2) comportant une projection par rapport à l'écartement des deux fourches (1),
**caractérisé en ce que** le dispositif comporte une plaque (5) portant de chaque côté sur les fourches (1) et des éléments de support (6) qui sont montés sur les fourches (1) ou la plaque (5) et qui peuvent être relevés de façon à pénétrer dans les ouvertures de passage (3), ouvertes vers le bas, de la palette (2) mise en place de manière à supporter davantage la palette (2) latéralement lorsque la palette (2) bascule.

11. Magasin à rayonnages, notamment magasin vertical à rayonnages, comportant au moins un rayonnage sur le grand côté duquel le gerbeur est déplaçable longitudinalement, le gerbeur comportant un dispositif qui est déplaçable verticalement au niveau du gerbeur et qui comporte deux fourches parallèles mobiles en vue du stockage et du déstockage afin de stocker et déstocker des palettes (2)
lesquelles palettes peuvent comporter deux ouvertures d'engagement (3), ouvertes vers le bas, qui sont destinées aux deux fourches (1) et dont la largeur et l'écartement correspondent à ceux des deux fourches (1), les palettes (2) comportant une projection par rapport à l'écartement des deux fourches (1),
**caractérisé en ce que** le dispositif comporte une plaque (5) portant de chaque côté sur les fourches (1) et des éléments de support (6) qui sont montés sur les fourches (1) ou la plaque (5) et qui peuvent être relevés de façon à pénétrer dans les ouvertures de passage (3), ouvertes vers le bas, de la palette (2) mise en place de manière à supporter davantage la palette (2) latéralement lorsque la palette (2) bascule.
